# FASCICULE DE BREVET EUROPEEN

(11) **EP 0 841 114 B1**
(45) Date de publication et mention de la délivrance du brevet: **23.09.1998**
(21) Numéro de dépôt: 97440093.9
(22) Date de dépôt: 03.10.1997
(51) Int. Cl.: B23B 29/04

(54) **Dispositif de serrage d'attachements à cône creux**
Spannvorrichtung für Werkzeughalter mit Hohlkonus
Clamping device for toolholders with hollow cone

(30) Priorité: 04.10.1996 FR 9612276
(43) Date de publication de la demande: 13.05.1998
(73) Titulaire: E.P.B. EMILE PFALZGRAF, S.A., 67330 Bouxwiller (FR)
(72) Inventeur: Freyermuth, Alain, 67350 Pfaffenhoffen (FR); Tugend, Raymond, 67350 Uberach (FR)
(74) Mandataire: Nuss, Pierre

(56) Documents cités:
- EP-A- 0 488 361
- DE-U- 9 212 205

## Description

La présente invention a pour objet un dispositif de serrage d'attachements à cône creux selon le préambule de la revendication 1 et comme connu par example du document EP-A-0 488 361. Un tel dispositif est adapté pour des le serrage d'attachements ou analogues dans des broches des machines-outils, en particulier des machines à commande numérique, des centres d'usinage, des machines ou lignes transfert, et des cellules et ateliers flexibles.

Il existe actuellement différents dispositifs permettant le serrage de porte-outils ou d'outils munis d'un moyen de fixation à cône creux. Ces dispositifs connus sont généralement actionnés latéralement ou par l'arrière et nécessitent un accès correspondant, de sorte que leur montage sur toutes les configurations de broches ou autres liaisons aux machines ou aux portes-outils n'est pratiquement pas possible.

On connaît également un moyen de fixation de tels dispositifs par baïllonette, cependant cette dernière ne garantit pas une sécurité et une fiabilité absolues en ce qui concerne le serrage et le positionnement. Or, pour une fixation de tels attachements, la précision du positionnement ainsi que la garantie de non desserrage lors de l'utilisation sont des qualités indispensables.

La présente invention a pour but de pallier ces inconvénients en proposant un dispositif de serrage d'attachements à cône creux permettant le montage desdits attachements à partir de l'avant, sans aucune autre intervention, ainsi que leur démontage.

A cet effet, le dispositif de serrage d'attachements à cône creux, qui est essentiellement constitué par une douille porte-mors de blocage de la pièce à fixer, prolongée par un moyen de fixation dans un support, est caractérisé en ce qu'il est pourvu d'un moyen de liaison avec possibilité de rotation relative entre la douille porte-mors et le moyen de fixation dans un support

L'invention sera mieux comprise, grâce à la description ci-après, qui se rapporte à un mode de réalisation préféré, donné à titre d'exemple non limitatif. et expliqué avec référence aux dessins schématiques annexés, dans lesquels :
la figure 1 est une vue en deux demi-coupes du dispositif conforme à l'invention ;
la figure 2 est une vue partielle, à plus grande échelle, d'un logement d'encliquetage des entraîneurs escamotables du moyen de déplacement angulaire relatif, et
la figure 3 est une vue partielle en élévation latérale de l'extrémité de la douille porte-mors de blocage.

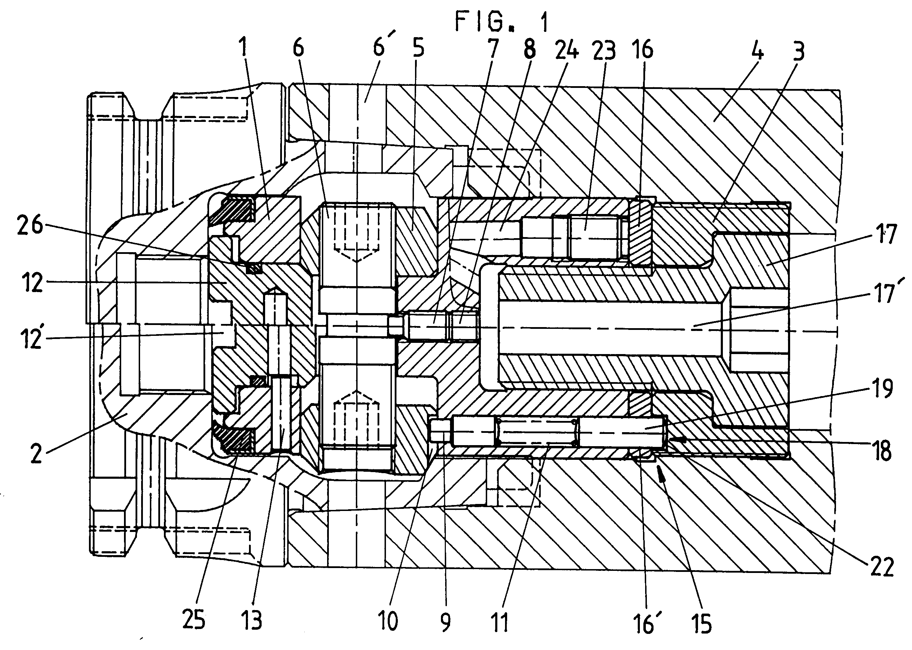

La figure 1 des dessins annexés représente, à titre d'exemple, un dispositif de serrage d'attachements à cône creux, qui est essentiellement constitué par une douille porte-mors 1 de blocage de la pièce à fixer 2, prolongée par un moyen 3 de fixation dans un support 4, tel qu'une broche ou analogue.

De manière connue, la douille porte-mors 1 comporte deux logements radiaux s'étendant perpendiculairement à son axe et dans lesquels sont montés deux mors de serrage 5 actionnés simultanément, pour coulisser radialement de manière symétrique, par une vis 6 pouvant être constructivement à pas différentiel ou à pas inverse, cette vis 6 étant maintenue en translation au moyen d'une vis à téton 7 coopérant avec une gorge circulaire pratiquée dans la zone centrale de la vis 6. Cette vis à téton 7 est bloquée en position de service par une vis 8. La commande de la vis 6 s'effectue à travers des perçages 6' du support 4, diamétralement opposés.

Les mors de serrage 5 réalisent le blocage de la pièce à fixer 2 par l'intermédiaire de leur surface externe chanfreinée venant en contact, en position de service, avec la partie conique intérieure de ladite pièce 2. Une telle position de service est représentée sur la partie inférieure de la figure 1, dans laquelle le mors 5, déplacé vers l'extérieur par rapport à l'axe longitudinal du dispositif, s'appuie par son bord chanfreiné droit contre la face interne conique de la pièce 2.

Afin d'éviter un démontage complet des mors 5 de la vis 6 et qu'ils tombent lors des manipulations de serrage et de desserrage, il est prévu, également de manière connue, de limiter leur course par l'intermédiaire d'une goupille 9 coopérant avec une rainure 10 de l'un des mors de serrage 5. Cette goupille est avantageusement chargée par un ressort 11 permettant son escamotage lors du montage du mors 5 correspondant.

Dans le cas d'un déplacement des mors 5 au moyen de la vis 6, ces derniers sont guidés dans la douille porte-mors 1 et sont maintenues en équilibre sous les efforts transmis par la vis 6 et de la réaction des surfaces de guidage de la douille 1 ainsi que des efforts de réaction de la pièce fixée 2.

Un tel dispositif de serrage d'attachements est pourvu, en outre, d'un éjecteur 12, guidé en translation dans un alésage de la douille porte-mors 1 et destiné à libérer la pièce fixée 2 par une poussée symétrique sur cette dernière, de manière à éviter tout problème d'arc-boutement lors du desserrage du dispositif, une goupille 13 assurant l'arrêt en rotation et limitant la course dudit éjecteur 12. L'opération d'éjection est effectué par la vis 6 qui, lors du desserrage, en provoquant la rentré des deux mors de serrage 5, met des surfaces internes inclinées desdits mors 5 en contact avec des surfaces correspondantes de la face de l'éjecteur 12 opposée à la face d'éjection.

Le moyen 3 de fixation dans un support 4, tel qu'une broche ou analogue, prolongeant la douille porte-mors 1 de blocage de la pièce à fixer 2 est essentiellement sous forme d'un élément fileté relié à ladite douille 1 et vissé dans le support 4. Cet élément fileté sera désigné ci-après par la même référence 3.

Conformément à l'invention, le dispositif de serrage d'attachements est pourvu d'un moyen 15 de déplacement angulaire relatif entre la douille porte-mors 1 et l'élément fileté formant le moyen 3 de fixation dans un support 4. Ce moyen 15 de déplacement angulaire relatif entre la douille porte-mors 1 et le moyen 3 de fixation dans un support 4 est avantageusement constitué par une rondelle 16, interposée entre l'élément fileté formant le moyen 3 de fixation du dispositif dans le support 4 et ladite douille 1, par une vis axiale 17 d'assemblage dudit l'élément fileté 3 et de la rondelle 16 sur la douille porte-mors 1 et par au moins un moyen irréversible 18 d'entraînement en rotation de l'élément fileté formant le moyen 3 de fixation du dispositif dans le support 4, dans le sens du desserrage de ce dernier, par la douille porte-mors 1.

La vis axiale 17 est serrée dans la douille porte-mors 1 avec un couple de serrage prédéterminé, correspondant au couple de serrage minimal nécessaire à la fixation dans le support 4, et est définitivement solidarisée avec ladite douille porte-mors 1 par collage ou par l'intermédiaire d'une vis radiale ou tout autre moyen d'assemblage.

La rondelle 16 est pourvue d'au moins un, de préférence plusieurs, trou 16' de passage d'une goupille 19, formant un entraîneur escamotable et montée de manière déplaçable élastiquement contre l'action d'un ressort de compression, dans un logement longitudinal correspondant de la douille porte-mors 1. La rondelle 16 sera avantageusement pourvu d'au moins deux trous 16' diamétralement opposés pour deux goupilles 19 montées dans douille porte-mors 1. Dans le mode de réalisation représenté à la figure 1 des dessins annexés, le logement d'au moins une goupille 19 est réalisé en prolongement de celui de la goupille 9 de retenu du mors de serrage 5, le ressort 11 d'actionnement de ladite goupille 9 formant simultanément le ressort de rappel de la goupille 19.

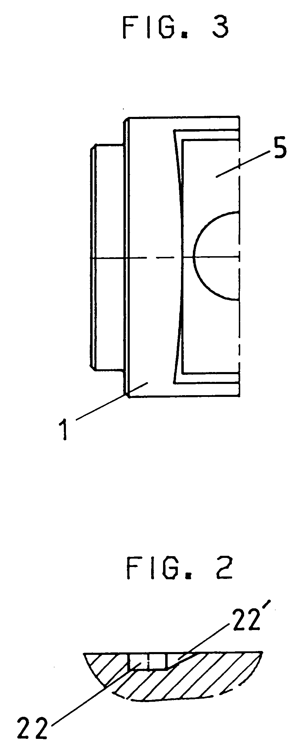

La face de l'élément fileté formant le moyen 3 de fixation du dispositif dans le support 4, qui est tournée vers la rondelle 16, est munie à intervalles réguliers de perçages 22 formant chacun un logement d'encliquetage d'un entraîneur escamotable constitué par une goupille 19 et présentant, en direction de son serrage dans le support 4, une rampe de sortie 22' (figure 2) débouchant sur ladite face, l'ensemble goupille 19 et perçages 22 formant le moyen irréversible 18 d'entraînement en rotation de l'élément fileté 3 dans le sens du desserrage. Ainsi, du fait de la liberté en rotation restant à l'élément fileté formant le moyen 3 de fixation du dispositif dans le support 4, sous réserve de développer un couple de rotation minimal, il est possible de poursuivre la rotation de la douille porte-mors 1, après obtention du serrage nécessaire dans le support 4, déterminé par le couple de serrage de la vis axiale 17, la ou les goupilles 19 glissant sur la ou les rampes de sortie 22'.

Il en résulte que le dispositif conforme à l'invention peut être parfaitement positionné dans le support 4, notamment de telle manière que l'axe de sa vis 6 d'actionnement des mors 5 soit aligné avec celui des perçages 6' du support 4, permettant ainsi la commande de ladite vis 6 au moyen d'un outil accédant latéralement et autorisant un serrage ou un desserrage de la connexion de la pièce à fixer 2.

Afin d'assurer le positionnement de la douille porte-mors 1 par rapport au support 4 et à l'élément fileté formant le moyen 3 de fixation du dispositif dans le support 4, après son réglage, il est prévu, conformément à un autre caractéristique de l'invention, de munir la douille porte-mors 1 d'au moins une vis de blocage 23 manoeuvrable à travers un perçage longitudinal 24 de ladite douille 1 s'étendant hors du plan passant par l'axe de la vis 6 de manoeuvre des mors 5. Dans la figure 1 du dessin annexé, la vis 23 et le perçage 24 correspondant sont représentés en coupe partielle décalée par rapport au plan de la demi-coupe supérieure. Cette vis 23 permet ainsi, une fois la position définitive atteinte, par simple serrage par l'avant à un couple prédéfini, l'obtention d'un effort de plaquage entre la rondelle 16 et l'élément fileté formant le moyen 3 de fixation du dispositif dans le support 4 et, de ce fait, d'éliminer le degré de liberté en rotation de la douille porte-mors 1.

Lors du réglage de position de la douille porte-mors 1 dans le support 4, la ou les goupilles 19, formant entraîneurs escamotables, vont passer dans les perçages 22, formant chacun un logement d'encliquetage d'un entraîneur escamotable, en s'éclipsant à chaque montée de rampe 22' pour permettre une rotation de la douille porte-mors 1 sans encombre. Au contraire, lors d'un desserrage, le sens de rotation est inversé et les goupilles 19 viendront retomber dans les perçages 22, qui forment alors butées, de sorte que le dispositif pourra être desserré. Cependant, ce desserrage nécessitera un desserrage préalable de la ou des vis de blocage 23 libérant ainsi la rotation entre la douille porte-mors 1 et l'élément fileté formant le moyen 3 de fixation du dispositif dans le support 4.

Selon une autre caractéristique de l'invention, et comme le montre plus particulièrement la figure 3 des dessins annexés, le guidage latéral des mors de serrage 5 dans les logements radiaux de la douille porte-mors 1, du côté d'application dans les logements opposé à celui d'application des mors 5 dans la pièce à fixer 2, est un guidage linéaire obtenu par coopération entre une surface latérale plane et une surface cintrée correspondante. Dans le mode de réalisation représenté, le logement de la douille porte-mors 1 est pourvu d'une face cintrée, près de l'extrémité de la douille porte-mors 1, alors que la face correspondante du mors 5 est plane. Cependant, il est également possible de prévoir une coopération de surfaces inverse.

Un tel mode de réalisation permet une possibilité de pivotement des mors 5 par rapport à l'axe de la vis 6 et ainsi une adaptation de leur positionnement à la configuration de la face interne de serrage de la pièce à fixer 2. Il en résulte que l'application des mors contre lesdites faces internes sera plus complète et que le blocage de la pièce 2 sera amélioré.

Conformément à une autre caractéristique de l'invention, le dispositif de serrage d'attachements à cône creux est pourvu, en outre, d'un moyen de lubrification centrale constitué par un trou central 17' de la vis axiale 17 d'assemblage de l'élément fileté formant le moyen 3 de fixation du dispositif dans le support 4 et de la rondelle 16 sur la douille porte-mors 1, débouchant dans le fond du logement de cette dernière dans ladite douille 1, et par des canaux de liaison de ce logement avec la face avant de la douille 1 et avec un canal transversal 12' de l'éjecteur 12, un joint périphérique 25 équipant l'extrémité de la douille porte-mors 1 s'appuyant contre la face arrière de la pièce à fixer 2 et l'étanchéité entre l'éjecteur 12 et ladite extrémité de la douille porte-mors 1 étant assurée par un joint 26. Ainsi, le lubrifiant est empêché de pénétrer dans la partie mobile composée par la vis 6 et les mors 5, d'une part, par l'intérieur entre la douille porte-mors 1 et l'éjecteur 12 par le joint 26 et, d'autre part, par l'extérieur entre la douille porte-mors 1 et la pièce à fixer 2 par le joint 25.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de serrage d'attachements à cône creux, constitué par une douille porte-mors (1) de blocage de la pièce à fixer (2), prolongée par un moyen (3) de fixation dans un support (4), tel qu'une broche ou analogue, cedit moyen (3) étant sous forme d'un élément fileté relié à ladite douille (1) et vissé dans le support (4), la douille porte-mors (1) comportant deux logements radiaux s'étendant perpendiculairement à son axe et dans lesquels sont montés deux mors de serrage (5) actionnés simultanément, pour coulisser radialement de manière symétrique, par une vis (6) maintenue en translation au moyen d'une vis à téton (7) coopérant avec une gorge circulaire pratiquée dans la zone centrale de la vis (6), un éjecteur (12), étant, en outre, guidé en translation dans un alésage de la douille porte-mors (1) et actionné par une poussée symétrique des mors (5), caractérisé en ce qu'il est pourvu d'un moyen (15) de déplacement angulaire relatif entre la douille porte-mors (1) et l'élément fileté formant le moyen (3) de fixation dans un support (4).

2. Dispositif, suivant la revendication 1, caractérisé en ce que le moyen (15) de déplacement angulaire relatif entre la douille porte-mors (1) et le moyen (3) de fixation dans un support (4) est constitué par une rondelle (16), interposée entre l'élément fileté formant le moyen (3) de fixation du dispositif dans le support (4) et ladite douille (1), par une vis axiale (17) d'assemblage dudit élément fileté (3) et de la rondelle (16) sur la douille porte-mors (1) et par au moins un moyen irréversible (18) d'entraînement en rotation de l'élément fileté formant le moyen (3) de fixation du dispositif dans le support (4), dans le sens du desserrage de ce dernier, par la douille porte-mors (1).

3. Dispositif, suivant la revendication 2, caractérisé en ce que la vis axiale (17) est serrée dans la douille porte-mors (1) avec un couple de serrage prédéterminé, correspondant au couple de serrage minimal nécessaire à la fixation dans le support (4), et est définitivement solidarisée avec ladite douille porte-mors (1) par collage ou par l'intermédiaire d'une vis radiale ou tout autre moyen d'assemblage.

4. Dispositif, suivant la revendication 2, caractérisé en ce que la rondelle (16) est pourvue d'au moins un, de préférence plusieurs, trou (16') de passage d'une goupille (19), formant un entraîneur escamotable et montée de manière déplaçable élastiquement contre l'action d'un ressort de compression, dans un logement longitudinal correspondant de la douille porte-mors (1).

5. Dispositif, suivant l'une quelconque des revendications 2 et 4, caractérisé en ce que la face de l'élément fileté formant le moyen (3) de fixation du dispositif dans le support (4), qui est tournée vers la rondelle (16), est munie à intervalles réguliers de perçages (22) formant chacun un logement d'encliquetage d'un entraîneur escamotable constitué par une goupille (19) et présentant, en direction de son serrage dans le support (4), une rampe de sortie (22') débouchant sur ladite face, l'ensemble goupille (19) et perçages (22) formant le moyen irréversible (18) d'entraînement en rotation de l'élément fileté formant le moyen (3) de fixation du dispositif dans le support (4).

6. Dispositif, suivant l'une quelconque des revendications 2 et 4, caractérisé en ce que la douille porte-mors (1) est munie d'au moins une vis de blocage (23) manoeuvrable à travers un perçage longitudinal (24) de ladite douille (1) s'étendant hors du plan passant par l'axe de la vis (6) de manoeuvre des mors (5).

7. Dispositif, suivant la revendication 1, caractérisé en ce que le guidage latéral des mors de serrage (5) dans les logements radiaux de la douille porte-mors (1), du côté d'application dans les logements opposé à celui d'application des mors (5) dans la pièce à fixer (2), est un guidage linéaire obtenu par coopération entre une surface latérale plane et une surface cintrée correspondante.

8. Dispositif, suivant la revendication 7, caractérisé en ce que le logement de la douille porte-mors (1) est pourvu d'une face cintrée, près de l'extrémité de la douille porte-mors (1), alors que la face correspondante du mors (5) est plane.

9. Dispositif, suivant la revendication 7, caractérisé en ce que le logement de la douille porte-mors (1) est pourvu de deux faces opposées parallèles, alors que le mors (5) présente, du côté opposé à l'extrémité de la douille porte-mors (1), une face cintrée.

10. Dispositif, suivant la revendication 1, caractérisé en ce qu'il est pourvu, en outre, d'un moyen de lubrification centrale constitué par un trou central (17') de la vis axiale (17) d'assemblage de l'élément fileté formant le moyen (3) de fixation du dispositif dans le support (4) et de la rondelle (16) sur la douille porte-mors (1), débouchant dans le fond du logement de cette dernière dans ladite douille (1), et par des canaux de liaison de ce logement avec la face avant de la douille (1) et avec un canal transversal (12') de l'éjecteur (12), un joint périphérique (25) équipant l'extrémité de la douille porte-mors (1) s'appuyant contre la face arrière de la pièce à fixer (2) et l'étanchéité entre l'éjecteur (12) et ladite extrémité de la douille porte-mors (1) étant assurée par un joint (26).

## Claims

1. A hollow-cone attachment clamping device comprising a jaw-bearing collet (1) for locking the part (2) for fixing and prolonged by a means (3) for fixing in a support (4), such as a spindle or the like, the said means (3) being in the form of a threaded component connected to the said collet (1) and screwed in the support (4), the jaw-bearing collet (1) comprising two radial recesses extending perpendicularly to its axis and containing two clamping jaws (5) simultaneously actuated by a screw (6) so that they slide radially in symmetrical manner, the screw (6) being held in translation by a teat screw (7) co-operating with a circular groove formed in the central zone of the screw (6), an ejector (12) being guided in translation in a bore in the jaw-bearing collet (1) and actuated by a symmetrical thrust of the jaws (5), the device being characterised in that it is provided with a means (15) for relative angular displacement between the jaw-bearing collet (1) and the threaded component forming the means (3) for fixing in a support (4).

2. A device according to claim 1, characterised in that the means (15) for relative angular displacement between the jaw-bearing collet (1) and the means (3) for fixing in a support (4) comprises a washer (16) inserted between the said collet (1) and the threaded element forming the means (3) for fixing the device in the support (4) and also comprises an axial screw (17) for fitting the said threaded component (3) and the washer (16) on to the jaw-bearing collet (1) and at least one means (18) for irreversibly driving in rotation the threaded component forming the means (3) for fixing the device in the support (4), in the direction for unclamping the support by the jaw-bearing collet (1).

3. A device according to claim 2, characterised in that the axial screw (17) is clamped in the jaw-bearing collet (1) with a predetermined clamping torque corresponding to the minimum clamping torque necessary for fixing in the support (4), and is permanently secured to the jaw-bearing collet (1) by sticking or by a radial screw or any other assembly means.

4. A device according to claim 2, characterised in that the washer (16) is formed with at least one or preferably a number of passage holes (16') for a pin (19) forming a retractable driver and mounted so as to be resiliently movable against the action of a compression spring in a corresponding longitudinal recess in the jaw-bearing collet (1).

5. A device according to claim 2 or 4, characterised in that the face of the threaded component forming the means (3) for fixing the device in the support (4) and turned towards the washer (16) is provided at regular intervals with perforations (22) each forming a recess for snap engagement of a retractable driver comprising a pin (19) and provided, in the direction in which it is clamped in the support (4), with an outlet slope (22') opening on to the said face, the assembly comprising the pin (19) and perforations (22) forming the irreversible means (18) for driving in rotation the threaded component constituting the means (3) for fixing the device in the support (4).

6. A device according to claim 2 or 4, characterised in that the jaw-bearing collet (1) is provided with at least one locking screw (23) which can be operated via a longitudinal perforation (24) in the said collet (1) extending out of the plane through the axis of the screw (6) for operating the jaws (5).

7. A device according to claim 1, characterised in that the lateral guidance of the clamping jaws (5) in the radial recesses in the jaw-bearing collet (1), on the side of application in the recesses remote from the side of application of the jaws (5) in the component (2) for fixing, is a linear guidance obtained by co-operation between a flat lateral surface and a corresponding curved surface.

8. A device according to claim 7, characterised in that the recess in the jaw-bearing collet (1) has a curved face near the end of the jaw-bearing collet (1) whereas the corresponding face of the jaw (5) is flat.

9. A device according to claim 7, characterised in that the recess in the jaw-bearing collet (1) has two parallel opposite faces whereas the jaw (5) has a curved face on the side remote from the end of the jaw-bearing collet (1).

10. A device according to claim 1, characterised in that it also comprises a central lubricating means comprising a central hole (17') in the axial screw (17) whereby the washer (16) and the threaded component forming the means (3) for fixing the device in the support (4) are mounted on the jaw-bearing collet (1), the hole opening into the bottom of the recess for the said washer in the said collet (1), and also comprises ducts connecting the recess to the front face of the collet (1) and to a transverse duct (12') in the ejector (12), a peripheral seal (25) being fitted on the end of the jaw-bearing collet (1) abutting the rear face of the part for fixing (2) and sealing-tightness between the ejector (12) and the said end of the jaw-bearing collet (1) being provided by a seal (26).

## Patentansprüche

1. Vorrichtung zum Spannen von Hohlkonusverbindungen
mit einer Spannbackenträgerhülse (1) zum Verriegeln des zu fixierenden Gegenstands (2), die durch ein Fixierungsmittel (3) in einem Aufnahmeteil (4), wie eine Spindel oder dergleichen, verlängert ist, wobei das Fixierungsmittel (3) als mit der Spannbackenträgerhülse (1) verbundenes und in das Aufnahmeteil (4) eingeschraubtes Gewindeelement ausgebildet ist, wobei die Spannbackenträgerhülse (1) zwei radiale Ausnehmungen hat, die sich senkrecht zu ihrer Achse erstrecken und in denen zwei gleichzeitig betätigte Spannbacken (5) so angebracht sind, daß sie symmetrisch in radialer Richtung gleiten, wozu eine Schraube (6) vorgesehen ist, die ihrerseits mittels einer Zapfenschraube (7) gegen Translationsbewegung gesichert ist, die mit einer im zentralen Bereich der Schraube (6) angebrachten kreisförmigen Nut zusammenwirkt, und wobei außerdem ein Auswerfer (12) in einer Bohrung der Spannbackenträgerhülse (1) translationsbeweglich geführt ist und durch einen symmetrischen Schub der Spannbacken (5) betätigt wird, dadurch gekennzeichnet, daß ein Mittel (15) zur Erzeugung einer Winkel-Relativbewegung zwischen der Spannbackenträgerhülse (1) und dem Gewindelement, das das Fixierungsmittel (3) in einem Aufnahmeteil (4) bildet, vorgesehen ist.

2. Vorrichtung nach Anspruch 1, dadurch gekennzeichnet,
daß das Mittel (15) zur Erzeugung der Winkel-Relativbewegung zwischen der Spannbackenträgerhülse (1) und dem Fixierungsmittel (3) in einem Aufnahmeteil (4) umfaßt: eine Unterlegscheibe (16), die zwischen dem Gewindelement, das das Fixierungsmittel (3) der Vorrichtung in einem Aufnahmeteil (4) bildet, und der Spannbackenträgerhülse (1) eingefügt ist; eine axiale Schraube (17) zum Zusammenbauen des besagten Gewindeelements (3) und der Unterlegscheibe (16) auf der Spannbackenträgerhülse (1); und mindestens ein Einweg-Mittel (18) zur Dreh-Mitnahme des Gewindeelements, das das Fixierungsmittel (3) der Vorrichtung in dem Aufnahmeteil (4) bildet, im Drehsinn eines Losschraubens desselben, durch die Spannbackenträgerhülse (1).

3. Vorrichtung nach Anspruch 2, dadurch gekennzeichnet,
daß die axiale Schraube (17) in die Spannbackenträgerhülse (1) mit einem vorbestimmten Anzugsmoment eingeschraubt ist, welches dem minimalen Anzugsmoment entspricht, das zur Fixierung in dem Aufnahmeteil (4) notwendig ist, und endgültig mit der Spannbackenträgerhülse (1) durch Verkleben oder mittels einer radialen Schraube oder eines anderen Montagemittels fest verbunden ist.

4. Vorrichtung nach Anspruch 2, dadurch gekennzeichnet,
daß in der Unterlegscheibe (16) mindestens ein Loch (16') vorgesehen ist, vorzugsweise mehrere, das zur Durchführung eines Stiftes (19) dient, der einen einziehbaren Mitnehmer bildet und elastisch gegenüber der Kraft einer Druckfeder verschiebbar in einer entsprechenden longitudinalen Ausnehmung der Spannbackenträgerhülse (1) angeordnet ist.

5. Vorrichtung nach einem der Ansprüche 2 und 4, dadurch
gekennzeichnet, daß eine Fläche des Gewindeelements, das das Fixierungsmittel (3) der Vorrichtung in dem Aufnahmeteil (4) bildet, die der Unterlegscheibe (16) zugewandt ist, in regelmäßigen Abständen mit Bohrungen (22) versehen ist, die jeweils eine Sperrenausnehmung für einen als Stift (19) ausgebildeten einziehbaren Mitnehmer bilden und in Richtung des Anziehens in das Aufnahmeteil (4) hinein eine in die besagte Fläche ausmündende Austrittsrampe (22') aufweisen, wobei die Gruppe der Stifte (19) und Bohrungen (22) das Einweg-Mittel (18) zur Dreh-Mitnahme des Gewindeelements bildet, das das Fixierungsmittel (3) der Vorrichtung in dem Aufnahmeteil (4) bildet.

6. Vorrichtung nach einem der Ansprüche 2 und 4, dadurch
gekennzeichnet, daß die Spannbackenträgerhülse (1) mit wenigstens einer Verriegelungsschraube (23) versehen ist, die durch eine longitudinale Bohrung (24) der Spannbackenträgerhülse (1) betätigbar ist, welche außerhalb der Ebene liegt, die durch die Achse der Schraube (6) zum Bewegen der Spannbacken (5) geht.

7. Vorrichtung nach Anspruch 1, dadurch gekennzeichnet,
daß die laterale Führung der Spannbacken (5) in den radialen Ausnehmungen der Spannbackenträgerhülse (1) in Richtung des Einführens in die Ausnehmungen, die der Richtung des Einführens der Spannbacken (5) in den zu fixierenden Gegenstand (2) entgegengesetzt ist, eine Linearführung ist, die durch das Zusammenwirken zwischen einer ebenen lateralen Oberfläche und einer gewölbten entsprechenden Oberfläche erhalten wird.

8. Vorrichtung nach Anspruch 7, dadurch gekennzeichnet
daß die Ausnehmung der Spannbackenträgerhülse (1) in der Nähe des Endes der Spannbackenträgerhülse (1) mit einer gewölbten Oberfläche versehen ist, während die entsprechende Oberfläche des Spannbackens (5) plan ist.

9. Vorrichtung nach Anspruch 7, dadurch gekennzeichnet,
daß die Ausnehmung der Spannbackenträgerhülse (1) mit zwei gegenüberliegenden parallelen Oberflächen versehen ist, während der Spannbacken (5) an der dem Ende der Spannbackenträgerhülse (1) gegenüberliegenden Seite eine gewölbte Oberfläche aufweist.

10. Vorrichtung nach Anspruch 1, dadurch gekennzeichnet,
daß außerdem eine zentrale Schmiereinrichtung vorgesehen ist, die umfaßt: ein zentrales Loch (17') in der axialen Schraube (17), die zum Zusammenbauen des Gewindeelements, das das Fixierungsmittel (3) der Vorrichtung in dem Aufnahmeteil (4) bildet, und der Unterlegscheibe (16) auf der Spannbackenträgerhülse (1) dient, welches in den Boden der Ausnehmung der letzteren in die Spannbackenträgerhülse (1) ausmündet und über Verbindungskanäle dieser Ausnehmung mit der vorderen Begrenzungsfläche der Spannbackenträgerhülse (1) und mit einem transversalen Kanal (12') des Auswerfers (12) in Verbindung steht, wobei eine in Umfangsrichtung verlaufende Dichtung (25), mit der das Ende der Spannbackenträgerhülse (1) ausgestattet ist, sich gegen die rückwärtige Begrenzungsfläche des zu fixierenden Gegenstands (2) abstützt und die Abdichtung zwischen dem Auswerfer (12) und dem besagten Ende der Spannbackenträgerhülse (1) durch eine Dichtung (26) sichergestellt wird.
